# EUROPÄISCHE PATENTSCHRIFT

(11) **EP 3 470 225 B1**
(45) Veröffentlichungstag und Bekanntmachung des Hinweises auf die Patenterteilung: **16.12.2020**
(21) Anmeldenummer: 18200494.5
(22) Anmeldetag: 15.10.2018
(51) Int. Cl.: B32B 33/00, B32B 21/00, E04F 15/10, B44C 5/04

(54) **VERFAHREN ZUR HERSTELLUNG EINES PLATTENFÖRMIGEN BAUELEMENTS**
METHOD FOR PRODUCING A PANEL-SHAPED BUILDING ELEMENT
PROCÉDÉ DE FABRICATION D'UN ÉLÉMENT DE CONSTRUCTION EN FORME DE PLAQUE

(30) Priorität: 16.10.2017 DE 102017124040
(43) Veröffentlichungstag der Anmeldung: 17.04.2019
(60) Teilanmeldung: 20183189.8
(73) Patentinhaber: Schulte, Guido, 59602 Rüthen-Meiste (DE)
(72) Erfinder: Schulte, Guido, 59602 Rüthen-Meiste (DE)
(74) Vertreter: Ksoll, Peter

(56) Entgegenhaltungen:
- DE-A1-102008 009 766
- US-A1- 2006 172 118
- US-A1- 2015 197 943

## Beschreibung

Die Erfindung betrifft ein Verfahren zur Herstellung eines plattenförmigen Bauelements, welches eine Trägerschicht und ein oberseitiges Holzfurnier aufweist sowie ein plattenförmiges Bauelement.

Paneele mit einer Nutzschicht bzw. Decklage aus Echtholz kommen insbesondere als Echtholzböden oder Parkettböden zum Einsatz. Solche Fußböden verbreiten ein natürliches Wohnklima. Sie sind angenehm fußwarm und gleichen Feuchtigkeitsschwankungen in der Raumluft aus, wodurch sie zu einem wohngesunden Raumklima beitragen. Auch als Wand- oder Deckenverkleidung sind solche Furnier- bzw. Holzpaneele sehr beliebt.

Gängig sind Fußbodenpaneele mit einem Dreischichtaufbau und profilierten Fügeflächen an den Seitenrändern zur Ausbildung von Verbindungsmitteln in Form von Nut und Feder oder einem sogenannten Klicksystem. Die Verbindungsmittel ermöglichen eine mechanische Koppelung der einzelnen Paneele untereinander innerhalb eines Bodenbelags oder einer Wand- bzw. Deckenverkleidung. Die Trägerplatte besteht üblicherweise aus Echtholzlamellen aus einem Holzwerkstoff, insbesondere einer hoch verdichteten Faserplatte (HDF). Die oberseitige Deckschicht aus Echtholz kann unterschiedlich stark sein. Bei einer Dicke der Deckschicht aus Holz von mehr als 2,5 mm spricht man von einem Parkettfußboden. Nach einer üblichen fachterminologischen Einteilung beginnen Furniere für Deckschichten von Fußbodenpaneelen bei etwa 0,4 mm. Grundsätzlich werden Fußbodenpaneele mit Holzdeckschichten von kleiner als 2,5 mm als Echtholz- oder Furnierboden bezeichnet.

Bekannt ist auch ein sogenanntes Echtholzlaminat. Dort wird auf die Deckschicht aus Furnier ein Overlay aufgetragen, beispielsweise in Form eines Melaminpapiers oder -films. Anschließend wird dieses Sandwich verpresst.

Im Umfang der US 2006/070325 A1 wird ein Fußbodenpaneel offenbart, enthaltend eine erste Schicht aus beispielsweise hoch- oder mittelverdichtetem Holzfaserwerkstoff und eine zweite Schicht aus einem Hartholzfurnier. Auf die erste Schicht wird ein Klebstoff aufgetragen, welcher in die obere Schicht eindringt. Als Klebstoff wird ein Harnstoff-Formaldehyd eingesetzt. Zur Herstellung des Fußbodenpaneels werden die Schichten unter Druck und erhöhter Temperatur miteinander verpresst.

Durch die US 2005/136234 A1 zählt ein verklebtes Paneel aus einer hoch- oder mittelverdichteten Trägerplatte mit einer Hartholzschicht zum Stand der Technik. Zum Verkleben der Schichten wird ein Polyurethan-Klebstoff verwendet. Auch hierbei erfolgt ein Verpressen der Schichten bei erhöhtem Druck und erhöhter Temperatur.

Zum technologischen Hintergrund gehört ferner die WO 2009/015682 A1, welche ein Fußbodenpaneel aus einer Trägerplatte und einer Schicht aus einer harzimprägnierten Schicht, vorzugsweise aus Papier, offenbart. Verwendet werden hierbei Harnstoffharze. Die Verbindung der Schichten erfolgt mittels einer Druck- und/oder Hitzeverpressung.

Die WO 2015/078434 A1 offenbart ein Fußboden-, Wand- oder Deckenpaneel und ein Verfahren zu dessen Herstellung. Das Paneel weist eine Trägerplatte aus einem Holzwerkstoff und ein oberseitiges Furnier auf. Trägerplatte und Furnier sind unter Eingliederung einer Harzschicht heiß miteinander verpresst. Beim Verpressen werden Poren, Risse und/oder Spalten im Furnier mit Harz verfüllt. Der Pressvorgang wird so ausgeführt, dass das Furnier mit Harz durchtränkt und nach dem Verpressen Harz an der Oberfläche des Furniers sichtbar wird. Hierdurch wird das Verkleben des Furniers mit der Trägerplatte und ein Spachteln des Furniers in einem Arbeitsvorgang durchgeführt.

Aus der US 2015/197943 A1 geht ein Verfahren zur Herstellung eines plattenförmigen Bauelements hervor, welches eine Trägerschicht und ein oberseitiges Holzfurnier aufweist, wobei zwischen der Trägerschicht und dem Holzfurnier eine Harzschicht vorgesehen ist und die Trägerschicht, die Harzschicht und das Holzfurnier miteinander verpresst werden. Vor dem Verpressen wird auf dem Holzfurnier ein Overlay aufgebracht, wobei ein Overlay verwendet wird, welches auf Basis von Polyurethan und/oder Polyurethan-Melaminharzgemischen gebildet ist. Das Overlay wird zusammen mit der Trägerschicht der Harzschicht und dem Holzfurnier verpresst.

Ein technologisch vergleichbares Verfahren und ein plattenförmiges Bauelement gehen auch aus der US 2006/172118 A1 hervor.

Durch die DE 10 2008 009 766 A1 zählt des Weiteren eine Materialschicht zum Stand der Technik, die auf einer Oberseite und auf einer Unterseite jeweils mit einem Haftvermittler, wie z. B. einer Vlieskaschierung, versehen ist. Auf der Oberseite der Materialschicht ist eine Deckmaterialschicht, z. B. aus Holzfurnier, aufgebracht. Auf der Unterseite der Materialschicht ist ein Trägermaterial aufgebracht. Diese sind jeweils mit der Materialschicht durch den Haftvermittler verbunden. Der Haftvermittler ist wärmeaktivierbar. Gemäß dem Vorschlag der DE 10 2008 009 766 A1 soll die Aktivierungstemperatur des Haftvermittlers auf der Oberseite der Materialschicht von der Aktivierungstemperatur des Haftvermittlers auf der Unterseite der Materialschicht verschieden sein.

Der Erfindung liegt ausgehend vom Stand der Technik die Aufgabe zugrunde, ein Verfahren zur Herstellung von plattenförmigen Bauelementen aufzuzeigen, welches die kostengünstige Herstellung von qualitativ hochwertigen Bauelementen mit verbesserten Oberflächeneigenschaften und verbesserten optischen Eigenschaften ermöglicht.

Die Lösung dieser Aufgabe besteht in einem Verfahren gemäß Anspruch 1.

Vorteilhafte Ausgestaltungen und Weiterbildungen des erfindungsgemäßen Verfahrens sind Gegenstand der abhängigen Ansprüche 2 bis 7.

Ein erfindungsgemäß hergestelltes plattenförmiges Bauelement, insbesondere ein Fußbodenpaneel, weist eine Trägerschicht und ein oberseitiges Holzfurnier auf, welche über eine Harzschicht miteinander verbunden sind. Die Harzschicht ist zwischen der Trägerschicht und dem Holzfurnier vorgesehen.

Erfindungsgemäß wird auf das Holzfurnier ein Overlay aufgebracht, wobei ein Overlay verwendet wird, welches auf Basis von Polyurethan (PUR) und/oder Polyurethan-(PUR)-Melaminharzgemischen gebildet ist. Die Trägerschicht, die Harzschicht, das Holzfurnier und das Overlay werden anschließend unter Druck und Temperatureinwirkung miteinander verpresst.

Der Polyurethan(PUR)-Anteil im Overlay beträgt vorzugsweise größer oder gleich (≥) 30 %.

Erfindungsgemäß kommt ein elastifiziertes Overlay zur Anwendung, welches aus Polyurethan und/oder Polyurethan-Melaminharzgemischen besteht. Hierbei handelt es sich um ein wärmeverpressbares Polyurethan. Das Overlay fliest beim Verpressen und der hierbei erfolgenden Wärmeeinwirkung plastisch. Gegenüber bekannten melaminbasierenden Overlays gibt das erfindungsgemäße Overlay weniger Feuchtigkeit bei der Aushärtung ab.

Die Erfindung sieht vor, dass als Overlay ein mit PUR und/oder PUR (Polyurethan)-Melamin-Harzgemischen imprägniertes zellulosehaltiges Papier verwendet wird.

Die Erfindung sieht vor, dass das Overlay auf Basis von PUR und/oder PUR-Melamin-Harzgemischen gebildet wird. Das Overlay weist hierdurch elastische Eigenschaften auf und ist weniger spröde als reine aus dem Laminatbodenbereich bekannte Melaminoverlays. Bei der Verpressung unter Hitze und Druck besitzt das Overlay ein vorteilhaftes Flies- und Aushärteverhalten, wodurch auch Fehlstellen, wie beispielsweise Äste oder Risse, einwandfrei mit dem Harz des Overlays verfüllt werden.

Bei dem nach dem erfindungsgemäßen Verfahren hergestellten plattenförmigen Bauelement ist die Furnieroberfläche nach dem Verpressen endfertig. Diese Produkte benötigen nur noch Trennschnitte, Profilierung und Verpackung.

Eine Farb- und Designgebung ist möglich, indem das Overlay ein- oder beidseitig, insbesondere rückseitig bzw. unterseitig bedruckt wird. Hierbei können Dekordrucke, insbesondere spiegelverkehrte Dekordrucke, oder Fond-Farbgebungen gedruckt werden. Das Endprodukt erscheint dann wie ein eingefärbtes Holz oder mit einem Vintage-Charakter. Auch kann der Druck so ausgeführt werden, dass der Farbverlauf bei den gedruckten Flächen das Endprodukt mit einem natürlichen Farbspiel erscheinen lässt.

Üblicherweise hat bei der konventionellen Herstellungsweise das Holzfurnier eine Feuchtigkeit, die sogenannte Verarbeitungsfeuchtigkeit, zwischen 5 % und 10 %. Regelmäßig liegt der Feuchtigkeitsgehalt bei ca. 7 %. Im Rahmen der Erfindung kann der Feuchtigkeitsgehalt des Holzfurniers vor dem Verpressen mit der Trägerschicht und der Harzschicht auf einen Feuchtigkeitsgehalt von kleiner oder gleich (≤) 4 %, insbesondere von kleiner oder gleich (≤) 3,0 %, eingestellt. Ein erfindungsgemäß hergestelltes plattenförmiges Bauelement weist eine ebene, vollflächig haftende Oberfläche auf. Das Harz infiltriert das Holzfurnier und verklebt die Trägerschicht mit dem Holzfurnier vollflächig.

Die vorliegende Erfindung bezieht sich insbesondere auf Echtholz- oder Furnierfußbodenpaneele mit einem Furnier aus Holz und einer Dicke des Furniers von kleiner als 2,5 mm, insbesondere mit einer Dicke zwischen 0,6 mm und 1,2 mm. Ebenso kann es sich bei dem Furnier um ein Korkfurnier, insbesondere ein Korkeichenfurnier, handeln.

Die Trägerschicht ist ein Plattenmaterial vorzugsweise aus einem Holzwerkstoff, wie beispielsweise Massivholz, Spanholz, Holzfaserwerkstoff, MDF (Medium Density Fiber Board) oder HDF (High Density Fiber Board). Bevorzugt kommt im Rahmen der Erfindung eine Trägerschicht aus HDF zum Einsatz. Ausgangsprodukt bei der Fertigung von erfindungsgemäßen Fußboden-, Wand- oder Deckenpaneelen ist eine großflächige Trägerschicht, vorliegend als Basisträgerschicht bezeichnet. Eine solche großflächige bzw. großformatige Trägerschicht bzw. Basisträgerschicht ist rechteckig konfiguriert und hat eine Größe von 2.000 mm bis 5.600 mm in der Länge und 1.200 mm bis 2.100 mm in der Breite. Üblicherweise besitzt die Trägerschicht bzw. die Basisträgerschicht in dieser Ausgestaltung eine Dicke von 5 mm bis 12 mm. Denkbar sind auch wasserfeste Materialien, zum Beispiel auf Basis mineralischer Werkstoffe, wie Faser-Zement, Sand-Bindemittelgemische oder Holz-Kunststoff-Verbundwerkstoffe (Wood-Plastic-Composites WPC) sowie Holzfaser-Polymer-Verbundwerkstoffe oder auch die Verwendung von Magnesitplatten. Ein Aspekt zielt hier auf die Verwendung von naturfaserverstärktem Kunststoff als Werkstoff für die Trägerschicht bzw. die Basisträgerschicht ab. Neben Holzfasern können hier auch andere Pflanzenfasern, wie Jute oder Flachs, verwendet werden, insbesondere in einem Holzfaser- oder Holzmehlanteil von 50% bis 90% und einem Kunststoffmatrix aus Polypropylen (PP). Ferner kann ein Holz-Kunststoff-Verbundwerkstoff auf Basis von thermoplastisch verarbeitbaren Duroplasten, wie modifiziertes Melaminharz mit Naturfaser- bzw. Naturmehlanteil, Verwendung finden. In diesem Zusammenhang bietet auch Bamboo Plastic Composites (BPC) interessante praktische Ansätze. Bei diesem Werkstoff kommen Bambusfasern bzw. Bambusmehl als Naturwerkstoff zum Einsatz.

Die Erfindung sieht ferner vor, dass die Trägerschicht auf Basis von nachwachsenden Rohstoffen, vorzugsweise auf Basis von Holz gebildet ist. Insbesondere ist die Trägerschicht durch ein Holzfurnier gebildet. Solche Holzfurniere haben eine Dicke bis zu 3 mm. Bei dieser Ausführungsform besteht der Schichtaufbau aus einem Holzfurnier als Trägerschicht und einem oberseitigen Holzfurnier, wobei zwischen der Trägerschicht aus Holzfurnier und dem oberseitigen Holzfurnier die Harzschicht vorgesehen ist. Die Holzfurniere und die Harzschicht werden miteinander verpresst.

Echtholzlaminatboden/Furnierböden mit einem melaminbasierenden Overlay sind im Stand der Technik bekannt. Diese Produkte weisen aber im Gegensatz zu der Erfindung immer nur sehr ruhige, ast- und rissfreie Furniere und zumeist nur sehr feinporige Hölzer auf. In den Porenbereichen oder Zonen mit Fehlstellen im Holz, wie es häufig bei Eichen- und Eschenhölzern vorkommt, fehlt bei klassischen Overlays nach dem Stand der Technik zu weißen, trüben Stellen im Overlay. Dort fehlt der Druck und in Verbindung mit Kondensationsfeuchtigkeit sind diese Punkte in der optischen Wirkung stark beeinträchtigt. Diese Nachteile werden durch die erfindungsgemäße neue Overlayrezeptur auf Basis oder mit Anteilen von wärmeverpressbaren Polyurethan vermieden.

In die Trägerschicht kann ein Stabilisierungselement, insbesondere eine Stabilisierungslage, beispielsweise eine Vlieslage, eingebettet sein.

Die PUR-Bindemittel in der polyurethanbasierenden Trägerschicht können zu einem Teil von größer 50 % aus nachwachsenden Rohstoffen bestehen. Durch den Bindemittelgehalt lässt sich die Elastizität und die Verformbarkeit der Trägerschicht einstellen. Vorzugsweise haben die Trägerschichten eine Stärke von 4 bis 10 mm.

Zwischen der Trägerschicht und dem Furnier ist eine Harzschicht vorgesehen. Die Trägerschicht, die Harzschicht und das Furnier werden miteinander verpresst und verbunden. Das Furnier ist vom Harz der Harzschicht durchdrungen bzw. infiltriert. Das Verpressen erfolgt heiß bei einer Temperatur, die im Wesentlichen abhängig ist vom Harzwerkstoff.

Ein wesentlicher Aspekt sieht vor, dass die Harzschicht auf Basis von Harzpulver gebildet ist, wobei dem Harzpulver Farbstoffe und/oder Bindemittel und/oder Härter und/oder Füllstoffe, insbesondere holzbasierende Füllstoffe, zugemischt sind.

Die Harzschicht wird in Pulverform vorzugsweise auf die Oberseite der Trägerschicht aufgetragen und anschließend vorgehärtet.

Das Verpressen erfolgt erfindungsgemäß bei einer Temperatur von mehr als 120 °C, vorzugsweise bei einer Temperatur zwischen 140 °C und 210 °C. Die Presstemperatur bezieht sich auf die Temperatur am Pressblech der Presse. Diese Temperatur steht auch an den Kontaktflächen des Pressblechs mit der Oberseite des Furniers bzw. der Unterseite der Trägerschicht an. Bei duroplastischen Harzen oder Reaktivharzen sind höhere Temperaturen erforderlich. Insbesondere erfolgt das Verpressen bei einer Temperatur zwischen 180 °C und 210 °C.

Bei dem in der Harzschicht eingesetzten Harzen handelt es sich insbesondere um ein Polyvinylacetat (Kurzzeichen PVAc), also einem thermoplastischen Kunststoff. Besonders bevorzugt handelt es sich um ein Polymerharz, insbesondere um ein Harnstoff-Formaldehyd-Kondensationsprodukt. Vorzugsweise kommt ein pulverförmiges konfektioniertes Harnstoff-Formaldehyd-Kondensationsprodukt zur Anwendung. Ferner kann es sich bei dem Harz der Harzschicht um ein duroplastisches Kunstharz handeln. Es können farbige oder transparente Harze, Harnstoffharze, Harnstoff-Melamine, Melamin-Polyurethan-Harz-Gemische oder Polymer-Harze zur Anwendung gelangen. Melamin-Pulverharze sind bekannt. Ein Aspekt der Erfindung zielt darauf ab, dass Harze zum Einsatz kommen, die unter Hitze aushärten bzw. reagieren. In diesem Zusammenhang bietet sich die Verwendung von aminoplastischen, duroplastischen oder Reaktivharzen, wie Polyurethan (PUR) oder thermoplastisches Polyurethan, an.

Die Harzschicht wird bevorzugt in Pulverform aufgetragen. Hierbei kommt ein Pulvergemisch zur Anwendung, welches Bindemittel in Form von Harzen, insbesondere Melaminharzen, Harnstoffharze, Phenolharze oder Gemische derselben, und weitere Additive, insbesondere antiabrasive Hilfsstoffe wie Korund, Silizium oder Porzellankörnungen, aufweist. Ferner kann das Pulvergemisch Biomaterial, insbesondere faser- und/oder pulverförmige Holzwerkstoffe, enthalten. Der Anteil an Holzwerkstoff in der Pulvermischung beträgt mindestens 30 %. Im Pulvergemisch enthaltene Holzfasern weisen eine Länge von bis zu 500 µm auf. Des Weiteren kann das die Harzschicht bildende Pulvergemisch Verdickungsmittel, insbesondere Zellulose, enthalten. Die Harzschicht wird in Pulverform auf die Oberseite der Trägerschicht aufgetragen und anschließend vorgehärtet. Hierzu wird die Pulverschicht angefeuchtet und durch Wärmeeinwirkung auf der Oberfläche der pulverförmigen Harzschicht eine Haut gebildet. Die Hautbildung kann durch Reaktionsstart der enthaltenen Bindemittel nach Art eines Angelierens geschehen oder durch Aufbringen von Feuchtigkeit, beispielsweise in Form eines Wassernebels, und/oder durch Wärmebeaufschlagung, beispielsweise durch IR-Strahler, erfolgen.

Ein weiterer vorteilhafter Aspekt wird in der Verwendung von Kauritharzen, insbesondere Kauritleimen, gesehen. Besonders geeignet sind Kauritpulverleime, die mit Wasser und Härter vermischt werden. Dies führt zu einer besonders effektiven Penetration der Poren im Furnier. Das Harz sorgt für eine gute Penetration in die Furnierschicht. In diesem Zusammenhang ist ein Einfärben des Kauritleimes, beispielsweise mit schwarzen oder braunen Farbstoffen, vorteilhaft, um den ansonsten farblosen Kauritleim als Kontrast sichtbar werden zu lassen. Zur Optimierung werden dem Harzgemisch Füllstoffe zugesetzt, beispielsweise in Form von Holzfasern, Holzspänen, Zellulosefasern, Korkmehlen, Gesteinsmehlen und weiteren bzw. ähnlichen natürlichen Füllstoffen.

Die Harzschicht kann als Pulver oder als flüssiger, insbesondere hochpastöser Film aufgetragen werden. Zum Auftrag auf die Basisträgerschicht wird eine wässrige Harzlösung hergestellt. Ein vorteilhaftes Mischungsverhältnis besteht aus zwei Gewichtsteilen Harzpulver und einem Gewichtsteil Wasser.

Vorzugsweise ist die Harzschicht eingefärbt, insbesondere schwarz oder braun eingefärbt. Dies erfolgt insbesondere durch Zugabe von Farb- bzw. Färbestoffen, beispielsweise Farbpigmenten, zum Harzpulver.

Eine weitere Optimierung von Harzpulvergemischen oder Harzgemischen erfolgt durch Zugabe von Füllstoffen, insbesondere Holzfasern, Holzspäne, Zellulosefasern, Korkmehl oder Gesteinsmehle und ähnliches, insbesondere natürliche Additive.

Zur Fertigung eines plattenförmigen Bauelements, beispielsweise eines Fußboden-, Wand- oder Deckenpaneels, werden eine großflächige bzw. großformatige Basisträgerschicht sowie ein Holzfurnier als Blattware in bedarfsgerechter Größe bereitgestellt. Dabei werden die Furniere als Streifen oder als zusammengesetztes (verklebt oder vernäht) Furnier oder als breites, auf das Format der Basisträgerschicht abgestimmtes Schälfurnier aufgelegt. Das Holzfurnier kann auf eine Feuchtigkeit von kleiner oder gleich (≤) 4 %, insbesondere kleiner oder gleich (≤) 3,0 % eingestellt sein. Hierzu werden die Holzfurniere vorzugsweise unmittelbar vor dem Verpressen einem Trocknungsprozess mit dem damit einhergehenden Feuchtigkeitsentzug unterzogen, so dass die Feuchtigkeit auf den erfindungsgemäßen Gehalt eingestellt wird. Es wird ein Mehrschichtkörper gebildet umfassend die Basisträgerschicht und das Holzfurnier. Hierzu werden Basisträgerschicht und das Holzfurnier unter Eingliederung einer Harzschicht zusammengeführt. Hierzu ist die Harzschicht vorzugsweise in Pulverform auf die Oberseite der Basisträgerschicht aufgetragen worden. Die trocken aufgetragene Pulverschicht wird dann vorgehärtet und dabei fixiert. Dies erfolgt durch einen Gelierprozess. Dies erfolgt insbesondere durch Aufbringen von Feuchtigkeit, beispielsweise in Form eines Wassernebels und anschließender Wärmebeaufschlagung, beispielsweise durch IR-Strahler. Oberhalb des Holzfurniers wird ein bereitgestelltes, harzhaltiges Overlay aufgebracht. Unterseitig der Trägerschicht wird optional eine Gegenzuglage angeordnet. Der so gebildete Mehrschichtkörper wird anschließend in einer Presse verpresst, so dass Basisträgerschicht, Harzschicht, Holzfurnier und Overlay sowie optional die und Gegenzuglage verbunden werden. Das Verpressen des Mehrschichtkörpers erfolgt in einer Presse, und zwar bei einem produkttechnisch abgestimmten Pressdruck.

Bei der Verwendung einer Harzschicht aus aminoplastischen, duroplastischen oder Reaktivharzen, wie Polyurethan (PUR) oder thermoplastischen Polyurethan, ist der Pressdruck erfindungsgemäß größer oder gleich (≥) 1000 Kilopascal (kPa). Vorzugsweise liegt der Pressdruck oberhalb von 3500 Kilopascal (kPa). Die Presstemperatur ist erfindungsgemäß größer oder gleich (≥) 120 °C. Vorzugsweise liegt die Presstemperatur zwischen 180 °C und 210 °C.

Die Presstemperatur bezieht sich auf die Temperatur am Pressblech der Presse. Bei dem erfindungsgemäßen Verfahren liegt die Presszeit, bei der der Mehrschichtkörper in der Presse mit Druck beaufschlagt wird, zwischen 10 Sekunden und 60 Sekunden. Bei Harzschichten auf Basis von Polymerharzen beträgt die Presszeit vorzugsweise zwischen 20 Sekunden und 40 Sekunden.

Die oberste Schicht des Mehrschichtkörpers bildet das Overlay. Dieses plastifiziert beim Verpressen unter Druck und Wärmeeinwirkung. Hierbei fließt der Werkstoff des Overlays in die Holzporen des darunter angeordneten Holzfurniers. Gleichzeitig wird das Holzfurnier von der Unterseite her mit Harz aus der Harzschicht infiltriert.

Beim Pressvorgang kann die Oberfläche der Furniere durch ein Strukturblech oder einen Strukturgeber eine Struktur, ein Muster oder Ornamente erhalten. Die Struktur kann im Glanzgrad in Teilbereichen variieren. Weiterhin sind verschiedene Strukturtiefen möglich. Die Strukturtiefe kann bis 0,6 mm betragen. Bezogen auf die Furnierstärke kann die Struktur eine Strukturtiefe von 2/3 der Furnierstärke besitzen.

Nach dem Pressvorgang wird der verpresste Mehrschichtkörper in einzelne Paneele geteilt. Die einzelnen Paneele werden in einem nachfolgenden Arbeitsschritt an ihren Seitenrändern profiliert. Das Profilieren erfolgt erst nach Abkühlung der Trägerschicht auf Raumtemperatur. Das Profilieren dient insbesondere zur Ausbildung von Verbindungsmitteln an den Längs- und Schmalseiten der Paneele.

Das Aufteilen des verpressten Mehrschichtkörpers erfolgt üblicherweise nach dem Abkühlen. Hierzu kann der Mehrschichtkörper über eine Kühlstrecke geführt oder zum Abkühlen zwischengelagert werden.

Als Presse kommt insbesondere eine Kurztakt-Presse zum Einsatz oder auch eine kontinuierliche Presse. Beim Heißpressvorgang bzw. Pressvorgang unter Temperatureinfluss wird die Harzschicht plastifiziert und penetriert in das Furnier. Ein wesentlicher Aspekt der Erfindung besteht darin, dass das Harz der Harzschicht das Furnier bis zur Oberseite des Holzfurniers durchdringt. Hierbei werden im Furnier vorhandene Poren, Risse, Spalten und/oder sonstige Fehlstellen beim Pressvorgang mit Harz verfüllt. Das Harz der Harzschicht bildet eine unlösbare Verbindung zwischen dem Furnier und der Trägerschicht. Ein besonderer Vorteil der Erfindung besteht folglich darin, dass zwei Fertigungsschritte, nämlich Kleben und Spachteln des Furniers, gemeinsam in einem Arbeitsvorgang durchgeführt werden.

Insbesondere wird das Verpressen des Mehrschichtkörpers so ausgeführt, dass das Furnier mit Harz durchtränkt und nach dem Verpressen Harz an der Oberfläche des Furniers sichtbar ist. In diesem Zusammenhang kommen insbesondere auf die Farbe des Furniers farblich abgestimmte Harze zur Anwendung. Produkttechnisch wird ein schwarzes Harz als universell und vorteilhaft angesehen. Zweckmäßigerweise wird das Verpressen so ausgeführt, dass die Oberfläche des Furniers und damit des Paneels nur mit sehr wenig Harz oder gar keinem Harz behaftet ist. Poren, Risse, Spalten oder sonstige Fehlstellen sind sichtbar ausgefüllt. Es tritt jedoch kein oder zumindest nur sehr wenig überschüssiges Harz an der Oberfläche aus.

Eine Alternative sieht vor, die Harzschicht durch einen oberseitig auf die Trägerschicht aufgebrachten Harzfilm zu bilden. Hierbei wird Harz flüssig auf die Trägerschicht aufgetragen. Er kann danach angetrocknet bzw. vorkondensiert werden. Der Harzfilm haftet auf der Trägerschicht als gel- bzw. wachsartige Schicht.

Weiterhin kann die Harzschicht auch unterseitig auf dem Furnier in Form eines Harzfilms ausgebildet sein. Auch hierbei wird Harz flüssig auf eine Seite des Furniers aufgetragen. Hierdurch wird das Furnier mit Harz imprägniert. Das flüssig aufgetragene Harz wird angetrocknet und vorkondensiert. Das so imprägnierte und mit der Harzschicht versehene Furnier wird nach dem Herstellen der Harzschicht der Weiterverwendung zugeführt. Vor der Bildung des Mehrschichtkörpers wird das Furnier gedreht, so dass die Harzschicht unterseitig des Furniers ist und mit der Oberseite der Basisträgerschicht in Kontakt gelangt.

Eine Harzschicht kann - wie ausgeführt - vorzugsweise durch einen Auftrag von Harz in Pulverform auf die Oberfläche der Trägerschicht oder auf das Furnier gebildet sein. Das pulverförmige Harz wird dann unter Feuchtigkeits- und Temperatureinfluss angeliert und vorgehärtet, so dass sich die Harzschicht ausbildet.

Generell kann das Harz auch pastös, also in Form einer Paste, vorliegen und verarbeitet werden.

Die Menge an Harz ist so dosiert, dass sie das Furnier infiltriert bzw. durchschlägt, jedoch durch die zugefahrene Presse nicht auf die Oberfläche des Furniers austreten kann. Poren, Fehlstellen, Risse oder Spalten im Furnier sind mit Harz verpresst und ausgefüllt. Die natürliche Holzoberfläche oder Korkoberfläche und -struktur bleibt erhalten. Das Harz kann mit einem Füllstoff angedickt sein. Hierdurch ist mehr Masse vorhanden, um Poren, Risse, Spalten und/oder Fehlstellen auszufüllen. Als Füllstoff können organische oder anorganische Materialien zum Einsatz gelangen, insbesondere mineralische Pigmente, Steinmehl oder Kreide, ebenso wie Holzpuder oder Holzmehl.

Die Gegenzuglage gleicht Spannungen im Mehrschichtkörper aus. Bei der Gegenzuglage kann es sich um ein Furnier, ein Papier, eine Folie oder auch einen Film, insbesondere einen Kunstharzfilm, handeln. Zweckmäßigerweise ist ein Gegenzugfurnier oder ein Gegenzugpapier ebenfalls beharzt bzw. mit Kunstharz imprägniert. Die Gegenzuglage wird bei der Herstellung des erfindungsgemäßen Fußboden-, Wand- oder Deckenpaneels gemeinsam mit der Basisträgerschicht, dem Furnier und der Harzschicht verpresst und unterseitig mit der Basisträgerschicht verbunden.

Die Paneele werden an ihren Seitenrändern profiliert und mit Verbindungsmitteln versehen. Verbindungsmittel können als Nut und Federn ausgestaltet sein. Vorzugsweise sind die Seitenränder mit einer Klickverbindung versehen. Weiterhin können die Paneele an ihren oberseitigen Rändern umlaufend mit einer Fase versehen sein. Bei einem Paneel mit Fase wirkt sich die Harzzwischenschicht sehr positiv bezüglich der Feuchtigkeitsabdichtung im verlegten Produkt aus.

Eine farbliche Gestaltung der Paneele ist weiterhin möglich, wenn an den Seitenrändern das Harz sichtbar bleibt. Insbesondere erfolgt dies durch ein farbiges Harz, welches farblich auf das Furnier abgestimmt ist. Hierbei können einzelne oder alle Seitenränder mit einem optisch sichtbaren Randstreifen aus Harz ausgebildet sein. Eine Varianz in der optischen Gestaltung einer Paneele ergibt sich, wenn ein Harz verwendet wird, welches farblich im Kontrast zur Farbe des Furniers steht. Hierdurch kann beispielsweise eine Fugenoptik gezielt erzeugt werden. Durch das Zusammenspiel von Harz und Furnier ist eine optische Akzentuierung der Oberfläche eines erfindungsgemäßen Fußboden-, Wand- oder Deckenpaneels möglich. Hierfür können im Harz auch Effektmaterialien, wie Pigmente und andere Füllstoffe, beispielsweise Glimmer, eingesetzt werden.

Ein Aspekt besteht weiterhin darin, die Fase als dekorative, optisch abgrenzende Kante auszubilden. Weiterhin kann das Furnier mit einem Dekor bedruckt sein. Vorzugsweise erfolgt das Bedrucken mittels Digitaldruck. Hierbei kommt ein auf die verwendeten Harze abgestimmtes System von Drucktinten zur Anwendung. Möglich ist es, auf das Furnier eine Versiegelung aufzutragen. Als Versiegelung wird der Auftrag einer Farbe, einer Beize, eines Öls oder auch eines Lacks bzw. Lacksystemen verstanden.

Ein weiterer Aspekt der Erfindung sieht vor, dass beim Verpressen eine Struktur in das Furnier, insbesondere in die Oberfläche des Furniers, eingeprägt wird. Auch dies trägt zu einer besonders eleganten und dekorativen Oberfläche bei. Weiterhin unterstützt der Prägevorgang die Penetration des Harzwerkstoffes in das Furnier vorteilhaft.

Ein erfindungsgemäß hergestelltes plattenförmiges Bauelement ist kostengünstig in der Fertigung und qualitativ hochwertig. Die Oberfläche der Bauelemente ist vollkommen glatt und hochfest.

Das Bauelement bestechen durch ihre natürliche Holzoptik bzw. Korkoptik mit einem rustikalen Charakter infolge der optisch wahrnehmbaren, verfüllten Risse, Spalten und/oder Astlöcher. Da das Furnier, also die oberseitige Nutz- bzw. Decklage des Bauelements, mit Harz durchtränkt bzw. imprägniert ist, wird zudem die Widerstandsfähigkeit, insbesondere die Eindruckbeständigkeit und die Durchriebbeständigkeit, erhöht. Durch die hohe Widerstandsfähigkeit ist eine mechanische Bearbeitung des Furniers, wie durch schleifen oder bürsten, möglich und zwar bei verringerter Gefahr, dass die Optik durch die mechanische Bearbeitungsvorgänge zerstört wird. Das Bauelement ist deutlich widerstandsfähiger. Die Erfindung ermöglicht in vorteilhafter Weise auch den Einsatz von weicheren Holzarten bzw. Furniere aus weicheren Hölzern, wie Lärche. Durch die Harzimprägnierung bzw. -durchtränkung wird ein Furnier aus einem weichen Holz in der Härte erhöht und widerstandsfähiger.

Im Rahmen der Erfindung können auch vorteilhaft gedämpfte oder geräucherte Furniere verwendet werden. Besonders geeignet sind ferner Furniere aus grobporigen Hölzern, wie Eiche, Esche, Lärche oder Fichte. Diese werden durch die erfindungsgemäße Harzinfiltrierung in der Qualität verbessert und optisch akzentuiert.

Die erfindungsgemäß hergestellten plattenförmigen Bauelemente sind besonders geeignet für die Herstellung von Oberflächenbelägen, insbesondere Fußbodenbelägen. Hierzu werden die Bauelemente vorzugsweise über die an den Seitenrändern ausgebildeten Verbindungsmittel miteinander gefügt.

## Patentansprüche

1. Verfahren zur Herstellung eines plattenförmigen Bauelements, insbesondere eines Fußbodenpaneels, welches eine Trägerschicht und ein oberseitiges Holzfurnier aufweist, wobei zwischen der Trägerschicht und dem Holzfurnier eine Harzschicht vorgesehen wird und die Trägerschicht, die Harzschicht und das Holzfurnier miteinander verpresst werden, wobei vor dem Verpressen auf dem Holzfurnier ein Overlay aufgebracht wird, wobei als Overlay ein mit Polyurethan (PUR) und/oder Polyurethan-(PUR)-Melaminharzgemischen imprägniertes zellulosehaltiges Papier verwendet wird und eine Trägerschicht verwendet wird, welche auf Basis von nachwachsenden Rohstoffen gebildet ist und das Overlay zusammen mit der Trägerschicht, der Harzschicht und dem Holzfurnier verpresst wird, **dadurch gekennzeichnet, dass** beim Pressvorgang
- der Pressdruck größer oder gleich (≥) 1000 Kilopascal (kPa), vorzugsweise größer oder gleich (≥) 5000 Kilopascal (kPa), ist,
- die Presstemperatur größer oder gleich (≥) 120 °C beträgt, vorzugsweise zwischen 140°C und 210 °C liegt und
- die Presszeit zwischen 10 und 60 Sekunden liegt;
nach dem Pressvorgang der verpresste Mehrschichtkörper in einzelne Paneele geteilt wird und die Paneele an ihren Seitenrändern profiliert sowie mit Verbindungsmitteln versehen werden..

2. Verfahren nach Anspruch 1, **dadurch gekennzeichnet, dass** der Polyurethan(PUR)-Anteil im Overlay größer oder gleich (≥) 30 % beträgt.

3. Verfahren nach Anspruch 1 oder 2, **dadurch gekennzeichnet, dass** die Trägerschicht auf Basis von Holz, insbesondere durch ein Holzfurnier gebildet ist.

4. Verfahren nach einem der Ansprüche 1 bis 3, **gekennzeichnet durch** folgende Schritte:
- Bereitstellen einer großflächigen Basisträgerschicht, welche auf Basis von nachwachsenden Rohstoffen, vorzugsweise auf Basis von Holz gebildet ist;
- Bereitstellen eines Holzfurniers;
- Bereitstellen eines Overlays, wobei ein Overlay verwendet wird, welches ein mit Polyurethan (PUR) und/oder Polyurethan-(PUR)-Melaminharzgemischen imprägniertes zellulosehaltiges Papier ist;
- Bildung eines Mehrschichtkörpers bestehend aus der Basisträgerschicht, dem Holzfurnier und einer zwischen der Basisträgerschicht und dem Holzfurnier eingegliederten Harzschicht sowie dem Overlay;
- Verbinden von Basisträgerschicht, Harzschicht, Holzfurnier und Overlay durch Verpressen des Mehrschichtkörpers in einer Presse.

5. Verfahren nach einem der Ansprüche 1 bis 4, **dadurch gekennzeichnet, dass** unterhalb der Trägerschicht oder der Basisträgerschicht vor dem Verpressen eine Gegenzuglage angeordnet wird und die Gegenzuglage sowie die Trägerschicht bzw. die Basisträgerschicht, die Harzschicht, das Holzfurnier und das Overlay gemeinsam verpresst werden.

6. Verfahren nach einem der Ansprüche 1 bis 5, **dadurch gekennzeichnet, dass** das Overlay vor dem Verpressen ein- oder beidseitig, insbesondere unterseitig, bedruckt wird.

7. Verfahren nach einem der Ansprüche 1 bis 6, **dadurch gekennzeichnet, dass** die Feuchtigkeit des Holzfurniers vor dem Verpressen auf kleiner oder gleich (≤) 4,0 %, insbesondere auf kleiner oder gleich (≤) 3,0 % eingestellt wird.

## Claims

1. Method for producing a panel-shaped building element, in particular a floor panel, which has a carrier layer and a wood veneer on the upper face, a resin layer being provided between the carrier layer and the wood veneer, and the carrier layer, the resin layer and the wood veneer being pressed together, an overlay being applied to the wood veneer before pressing, wherein a cellulose-containing paper impregnated with polyurethane (PUR) and/or polyurethane-(PUR)-melamine resin mixtures is used as the overlay and a carrier layer is used which is formed on the basis of renewable raw materials and the overlay is pressed together with the carrier layer, the resin layer and the wood veneer, **characterised in that** during the pressing process
- the pressing pressure is greater than or equal to (≥) 1000 kilopascal (kPa), preferably greater than or equal to (≥) 5000 kilopascal (kPa),
- the pressing temperature is greater than or equal to (≥) 120 °C, and preferably lies between 140 °C and 210 °C, and
- the pressing time lies between 10 and 60 seconds;
after the pressing process, the pressed multi-layer body is divided into individual panels and the panels are profiled at their side edges and provided with connecting means.

2. Method according to claim 1, **characterised in that** the polyurethane (PUR) content in the overlay is greater than or equal to (≥) 30%.

3. Method according to claim 1 or 2, **characterised in that** the carrier layer is formed on the basis of wood, in particular by a wood veneer.

4. Method according to any one of claims 1 to 3, **characterised by** the following steps:
- providing a large-scale base carrier layer which is formed on the basis of renewable raw materials, preferably on the basis of wood;
- providing a wood veneer;
- providing an overlay, wherein an overlay is used which is a cellulose-containing paper impregnated with polyurethane (PUR) and/or polyurethane (PUR)-melamine resin mixtures;
- forming a multi-layer body consisting of the base carrier layer, the wood veneer and a resin layer interposed between the base carrier layer and the wood veneer, as well as the overlay;
- bonding of base carrier layer, resin layer, wood veneer and overlay by pressing the multi-layer body in a press.

5. Method according to any one of claims 1 to 4, **characterised in that** a backing layer is arranged underneath the carrier layer or the base carrier layer before the pressing, and the backing layer as well as the carrier layer or the base carrier layer, the resin layer, the wood veneer and the overlay are pressed together.

6. Method according to any one of claims 1 to 5, **characterised in that** before the pressing the overlay is printed on one or both sides, in particular on the underside.

7. Method according to any one of claims 1 to 6, **characterised in that** before the pressing the moisture content of the wood veneer is adjusted to less than or equal to (≤) 4.0%, in particular to less than or equal to (≤) 3.0%.

## Revendications

1. Procédé de fabrication d'un élément de construction en forme de plaque, en particulier un panneau de revêtement de sol qui comprend une couche de support et un placage bois supérieur, une couche de résine étant prévue entre la couche de support et le placage bois, et la couche de support, la couche de résine et le placage bois sont pressés les uns contre les autres, un overlay étant appliqué préalablement au pressage sur le placage bois, et l'overlay utilisé est un papier cellulosique imprégné de polyuréthane (PUR) et/ou de mélanges de résine mélamine-polyuréthane (PUR), et une couche de support qui est formée sur la base de matières premières renouvelables est utilisée, et l'overlay est pressé conjointement à la couche de support, la couche de résine et le placage bois, **caractérisé en ce que** lors de l'opération de pressage
- la pression de pressage est supérieure ou égale (≥) à 1000 kilopascals (kPa), de préférence supérieure ou égale (≥) à 5000 kilopascals (kPa),
- la température de pressage est supérieure ou égale (≥) à 120°C, de préférence est comprise entre 140 °C et 210 °C et
- le temps de pressage est compris entre 10 et 60 secondes; après l'opération de pressage, le corps multicouches compressé est divisé en différents panneaux et les panneaux sont profilés sur leurs bords latéraux et munis de moyens d'assemblage.

2. Procédé selon la revendication 1, **caractérisé en ce que** la teneur en polyuréthane (PUR) de l'overlay est supérieure ou égale (≥) à 30%.

3. Procédé selon la revendication 1 ou 2, caractérisé en ce la couche de support est formée à base de bois, en particulier par un placage bois.

4. Procédé selon l'une des revendications 1 à 3, **caractérisé par** les étapes suivantes :
- fourniture d'une couche de support de base de grande surface, qui est formée à base de matières premières renouvelables, de préférence à base de bois,
- fourniture d'un placage bois ;
- fourniture d'un overlay, un overlay étant utilisé, lequel est un papier cellulosique imprégné de polyuréthane (PUR) et/ou de mélanges de résine mélamine-polyuréthane (PUR) ;
- formation d'un corps multicouches composé de la couche de support de base, du placage bois et d'une couche de résine incorporée entre la couche de support de base et le placage bois ainsi que de l'overlay ;
- assemblage de la couche de support de base, de la couche de résine, du placage bois et de l'overlay par pressage du corps multicouches dans une presse.

5. Procédé selon l'une des revendications 1 à 4, **caractérisé en ce qu'**une feuille de contre-tension est agencée en dessous de la couche de support ou de la couche de support de base avant le pressage, et la feuille de contre-tension, ainsi que la couche de support et/ou la couche de support de base, la couche de résine, le placage bois et l'overlay sont pressés les uns contre les autres.

6. Procédé selon l'une des revendications 1 à 5, **caractérisé en ce que** l'overlay est imprimé avant le pressage sur une ou deux faces, en particulier sur la face inférieure.

7. Procédé selon l'une des revendications 1 à 6, **caractérisé en ce que** l'humidité du placage bois est réglée avant le pressage sur moins de ou égal (≤) à 4,0 %, en particulier sur moins de ou égal (≤) à 3,0%.
